# EUROPEAN PATENT SPECIFICATION

(11) **EP 2 821 978 B1**
(45) Date of publication and mention of the grant of the patent: **26.10.2022**
(21) Application number: 13754943.2
(22) Date of filing: 27.02.2013
(51) Int. Cl.: G08G 1/09, B60R 21/00, G08G 1/16, B60W 50/14, B62J 99/00, B62M 7/04, B60W 40/09, B62K 11/04, B60W 50/00, G06K 9/00

(54) **OPERATION-STATE-SHARING DEVICE AND OPERATION-STATE-SHARING SYSTEM**
VORRICHTUNG ZUR GEMEINSAMEN NUTZUNG EINES BETRIEBSSTATUS UND SYSTEM ZUR GEMEINSAMEN NUTZUNG EINES BETRIEBSSTATUS
DISPOSITIF DE PARTAGE D'ÉTAT D'OPÉRATION ET SYSTÈME DE PARTAGE D'ÉTAT D'OPÉRATION

(30) Priority: 27.02.2012 JP 2012039931
(43) Date of publication of application: 07.01.2015
(73) Proprietor: Yamaha Hatsudoki Kabushiki Kaisha, Iwata-shi, Shizuoka 438-8501 (JP)
(72) Inventor: YONETA, Keisuke, Iwata-shi Shizuoka 438-8501 (JP); DAIMOTO, Hiroshi, Iwata-shi Shizuoka 438-8501 (JP); YOSHIKURA, Hajime, Iwata-shi Shizuoka 438-8501 (JP)
(74) Representative: Grünecker Patent- und Rechtsanwälte PartG mbB
(86) International application number: PCT/JP2013/001180
(87) International publication number: WO 2013/128920

(56) References cited:
- JP-A- 2007 241 729
- JP-A- 2009 134 334
- JP-A- 2010 029 537
- JP-A- 2010 205 123
- JP-A- 2010 217 956
- US-A1- 2005 021 204
- US-A1- 2006 220 915
- US-A1- 2010 299 001

## Description

### Technical Field

The present invention relates to a driving state sharing device, and a driving state sharing system configured to share information on a driving skill and a cognitive and judgement ability of a driver who drives a vehicle with drivers of other vehicles around the vehicle.

### Background Art

A skill evaluating apparatus for evaluating a driving skill of a driver who drives a two-wheeled or four-wheeled vehicle has been currently used. For a four-wheeled vehicle, a driving skill of the driver can be determined from steering angles. For a two-wheeled vehicle, a variation in roll direction, pitch direction, or caster angle is detected in addition to a variation in yaw direction, and then a driving skill of the driver can be evaluated from the variations. In addition, an apparatus has been currently used for evaluating a cognitive and judgement ability of a driver to a surrounding environment. The driving skill and the cognitive and judgement ability evaluated by the above evaluating apparatus are announced to the driver via a monitor or with voice information.

### (1) Technique of Patent Literature 1

Patent Literature 1 discloses a rider characteristic determining device that detects a variation in roll direction, pitch direction, or caster angle in addition to a variation in yaw direction. Then the rider characteristic determining device can determine vehicle stability, a turning characteristic and an overall characteristic of a rider based on detection values of the variations to present the determination results on a monitor.

### (2) Technique of Patent Literature 2

A mental work load detector disclosed in Patent Literature 2 senses the electroencephalogram of a rider and detects levels of a mental work load on a perceptual-central processing system, thereby allowing estimation of a cognitive and judgement ability of the rider.

### (3) Technique of Patent Literature 3

Patent Literature 3 discloses an arousal degree drop warning device that detects arousal degrees using a heart rate of a driver. When an arousal degree is low, a warning vibration is imparted to a steering operating device, and a hazard light is turned to warn the surrounding vehicle.

### (3) Technique of Patent Literature 4

Patent Literature 4 describes a driver advisory system which can be used for transmitting information regarding the status of a driver of the host vehicle to other vehicles. This system includes a sensor, a first processor and a communication unit.

### (3) Technique of Patent Literature 5

Patent Literature 5 provides a vehicle control device which permits to display the own vehicle and the surrounding vehicles. At the same time, information indicating driving abilities of the surrounding vehicles is acquired from the surrounding vehicles by inter-vehicle communication. This information is determined from the birth date, the license issue date and the traffic regulation violation history.
[Patent Literature 1]
   International Publication WO2011-077638
[Patent Literature 2]
   Japanese Patent Publication No. 2009-297129A
[Patent Literature 3]
   Japanese Patent Publication H08-268287A
[Patent Literature 4]
   American Patent Publication US2006/220915 A1
[Patent Literature 5]
   Japanese Patent Publication No. 2009-134334A

### Summary of Invention

### Technical Problem

The apparatus disclosed in the above Patent Literatures can evaluate a vehicle driving skill or a cognitive and judgement ability of the driver. On the other hand, the evaluated results cannot be shared with drivers of the other vehicles according to Patent Literatures 1 to 3. The device in Patent Literature 3 turns a hazard light in the case of a low arousal degree. However, the drivers of the other vehicles cannot understand from the vehicle with the turned hazard light that the driver of the vehicle has a low arousal degree.

The present invention has been made regarding the state of the art noted above, and its one object is to provide a driving state sharing device and a driving state sharing system that allow driver states to be shared among vehicles.

### Solution to Problem

To fulfill the above object, the present invention provides a driving state sharing device according to claim 1. A first embodiment disclosed herein discloses a driving state sharing device that shares driving states of an own vehicle and other vehicles. The driving state sharing device includes a driver state detector configured to detect a driver state of the own vehicle, a traveling position detector configured to detect a traveling position of the own vehicle, a communication unit configured to transmit the driver state and the traveling position of the own vehicle and receive other driver states and traveling positions of the other vehicles, and a driving state presentation unit configured to present the detected driver state and the traveling position of the own vehicle as well as the driver states and the traveling positions of the other vehicles.

With the driving state sharing device according to the embodiment of the present invention, the driver state detector detects the state of the driver of the own vehicle. The traveling position detector detects the traveling position of the own vehicle. The communication unit transmits the detected state of the driver and the traveling position of the own vehicle. In addition, the communication unit receives the driver states and the traveling positions of other vehicles. The driving state presentation unit presents the detected driver state and the traveling position of the own vehicle, and also presents the received driver states and the traveling positions of the other vehicles. This construction allows the driver of the own vehicle to recognize the driver states of the other vehicles that are unable to be determined only with visual judgement. Consequently, the driver of the own vehicle can exhibit driving behaviour and avoidance behavior in response to the driver states of the other vehicles.

Moreover, it is preferable that the driver state detector includes at least one of a driving skill determining unit configured to determine a driving skill of the driver and a cognitive and judgement ability determining unit configured to a determine a cognitive and judgement ability of the driver. The driving skill determining unit determines the driving skill of the driver. The cognitive and judgement ability determining unit determines the cognitive and judgement ability of the driver. The driver state detector detects at least one of the driving skill and the cognitive and judgement ability as the driver state. Consequently, the driver state is accurately detectable.

Moreover, the driving state presentation unit includes a presentation mode selecting unit configured to select presentation modes of the driver states of the other vehicles based on the driver state of the own vehicle, and a presentation information generating unit configured to generate presentation information in response to the selected presentation modes based on the driver state and the traveling position of the own vehicle and the driver states and the traveling positions of the other vehicles.

The presentation mode selecting unit selects the presentation modes of the driver states of the other vehicles based on the driver state of the own vehicle. The presentation information generating unit generates the presentation information in response to the selected presentation modes based on the driver state and the traveling position of the own vehicle and the driver states and the traveling positions of the other vehicles. This can provide optimal presentation information to the drivers in response to the driver state of the own vehicle.

Moreover, it is preferable that the presentation information generating unit generates presentation information in response to the selected presentation modes also based on a distance between the traveling position of the own vehicle and the traveling positions of the other vehicles. Since the presentation information is generated based on the distance between the traveling position of the own vehicle and the traveling positions of the other vehicles, the presentation information varies depending on a distance between the own vehicle and the other vehicles. Consequently, the driver states of the other vehicles can be provided to the driver of the own vehicle at an optimal timing.

Moreover, it is preferable that the driving state sharing device includes a database configured to store the driver state of the own vehicle and the driver states of the other vehicle, and a driver state transition calculating unit configured to calculate transitions in the driver states of the own vehicle and the other vehicles based on the information stored in the database. The presentation information generating unit preferably generates the presentation information also based on the transitions in the driver states of the own vehicle and the other vehicles.

The database stores the driver state of the own vehicle and the driver states of the other vehicles. The driver state transition calculating unit calculates the transitions in the driver states of the own vehicle and the other vehicles based on the stored information. Since the presentation information generating unit generates the presentation information also based on the transitions, the transitions of various driver states can be shared. Consequently, the driver can recognize whether the driver states of the other vehicles vary from a suitable state to an unsuitable state for driving the vehicles or vice versa.

Moreover, it is preferable that ID information corresponding to each vehicle is given to the detected driver state and the traveling position of the vehicle. Since the ID information corresponding to each vehicle is given to the detected driver state and the traveling position of the vehicle, variations in the driver state and the traveling position of each vehicle can be recognized.

A second embodiment disclosed herein discloses a driving state sharing system. The driving state sharing system includes a plurality of driver sharing devices, and a web server configured to receive driver states and traveling positions of various vehicles from the communication units and transmit to the vehicles the driver states and the traveling positions of the vehicles traveling therearound. This construction allows the driver of the own vehicle to recognize the driver states of the other vehicles that are unable to be determined only with visual judgement. Consequently, the driver of the own vehicle can exhibit driving behaviour and avoidance behavior in response to the driver states of the other vehicles.

### Advantageous Effects of Invention

The embodiments of the present invention can provide a driving state sharing device and a driving state sharing system that allow sharing of the driver states among the vehicles.

### Brief Description of Drawings

Figure 1 is a side view schematically illustrating an two-wheeled motor vehicle according to one embodiment of the present invention.
Figure 2 is a function block diagram illustrating a driving state sharing device according to the embodiment.
Figure 3 is a side view schematically illustrating an four-wheeled motor vehicle according to the embodiment.
Figures 4 and 5 are each a flow chart of processing state information according to the embodiment.
Figures 6 to 9 each illustrate presentation information presented on a visual presentation unit according to the embodiment.
Figure 10 is a function block diagram illustrating a driving state sharing system according to another embodiment of the present invention.
Figure 11 illustrates presentation information presented on a visual presentation unit according to one modification of the present invention.

### Embodiment 1

The following describes Embodiment 1 of the present invention with reference to drawings. Here, a two-wheeled motor vehicle and a four-wheeled motor vehicle are to be described as one example of the vehicle according to Embodiment 1. In the following description, back and forth, and right and left are defined with reference of a traveling direction of the two-wheeled motor vehicle and the four-wheeled motor vehicle. Here, an own vehicle is described as a two-wheeled motor vehicle, and the other vehicles are each described as a four-wheeled motor vehicle. However, this is not limitative. For instance, the own vehicle may be a motor four-wheeled vehicle, and the other vehicles may each be a two-wheeled motor vehicle. In the following description, an element meaning both the motor two-wheeled vehicle and the four-wheeled motor vehicle is simply referred to as a vehicle. In addition, a driving state of the vehicle means a traveling position and a driver state of the vehicle.

### 1. Outline Construction of Vehicle

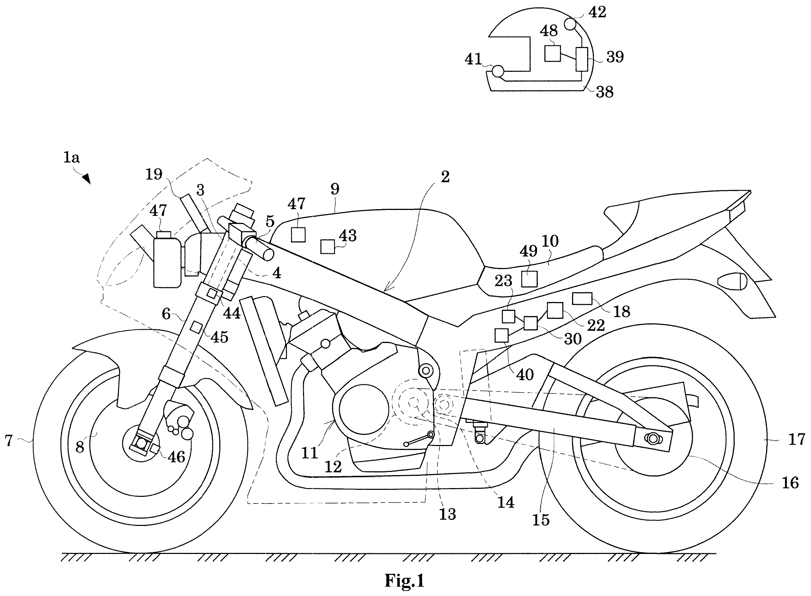

Figure 1 is a side view illustrated an outline construction of a two-wheeled motor vehicle provided with a driving state sharing device according to one embodiment. The outline construction of the vehicle is to be described taking a two-wheeled motor vehicle 1a as one example. The two-wheeled motor vehicle 1a includes a main frame 2. The main frame 2 is provided with a head tube 3 on an upper front end thereof. The head tube 3 has a steering shaft 4 inserted thereinto. An upper end of the steering shaft 4 is connected to a handlebar 5.

A lower end of the steering shaft 4 is connected to a pair of extendible and contractible front forks 6. Consequently, turning operation of the handlebar 5 causes the front forks 6 to swing. A front wheel 7 is rotatably attached to lower ends of the front forks 6. Expansion and contraction of the front forks 6 absorbs vibration of the front wheel 7. Brakes 8 are attached to the lower ends of the front forks 6 to provide braking rotation of the front wheel 7 through operation of a brake lever (not shown).

A fuel tank 9 and a seat 10 are supported as arranged fore and aft on an upper portion of the main frame 2. The main frame 2 holds an engine 11 and a transmission 12 below the fuel tank 9. The transmission 12 includes a drive shaft 13 that outputs power generated by the engine 11. The drive shaft 13 is connected to a drive sprocket 14.

A swing arm 15 is swingably supported on a lower rearward portion of the main frame 2. A driven sprocket 16 and a rear wheel 17 are rotatably supported on a rear end of the swing arm 15. An ECU (Electronic Control Unit; electronic control unit) 18 is provided below the sear 10 for controlling operations of various components of the two-wheeled motor vehicle 1a. The two-wheeled motor vehicle 1a further includes a monitor 19. The monitor 19 is provided in front of the handlebar 5, and presents road information.

### 2. Construction of Driving State Sharing Apparatus

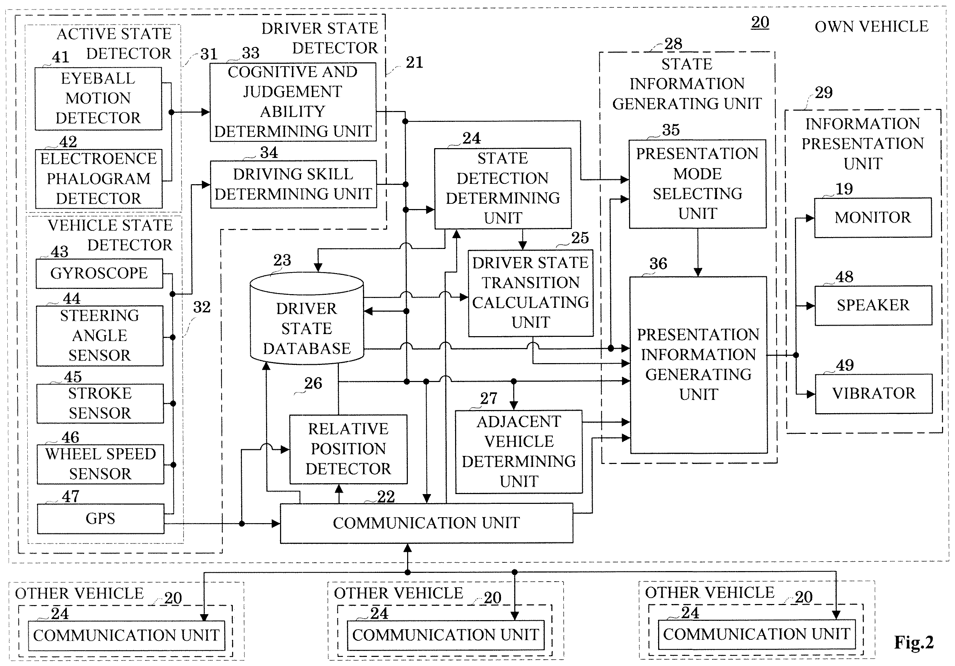

The following describes a driving state sharing device with reference to Figures 1 and 2. Figure 2 is a function block diagram of the driving state sharing device. The driving state sharing device 20 includes a driver state detector 21, a communication unit 22, a driver state database 23, a state detection determining unit 24, a driver state transition calculating unit 25, a relative position detector 26, an adjacent vehicle determining unit 27, a state information generating unit 28, and an information presentation unit 29. The other vehicles traveling around the own vehicle also include the driving state sharing device 20 having these components. The driving state sharing device 20 transmits and receives position information and driver state information of various vehicles to and from the driving state sharing devices 20 provided on the other vehicles via communication units 22.

### 2.1 Driver State Detector

The driver state detector 21 detects a state of a driver that drives the vehicle. In Embodiment 1, a cognitive and judgement ability and a driving skill are detected as the driver state. The driver state detector 21 includes an active state detector 31 configured to detect an active state of the driver personally, a vehicle state detector 32 configured to detect a traveling state of the vehicle, a cognitive and judgement ability determining unit 33 configured to determine a cognitive and judgement ability of the driver based on the detected active state, and a driving skill determining unit 34 configured to detect a driving skill of the driver based on the detected traveling state of the vehicle.

The active state detector 31 is formed by sensors configured to detect the active state of the driver. Examples of the active state of the driver include a frequency and a magnitude of eyeball motions, blinks, and voices, and an electroencephalogram waveform of the driver. Embodiment 1 adopts as the sensors an eyeball motion detector 41 configured to detect the eyeball motions of the driver and an electroencephalogram detector 42 configured to detect electroencephalogram of the driver. When the vehicle is a two-wheeled motor vehicle 1a, the vehicle includes the eyeball motion detector 41 and the electroencephalogram detector 42 on a helmet 38 wearable by the driver. Either the eyeball motion detector 41 or the electroencephalogram detector 42 may be adopted as the active state detector 31. Alternatively, another detector may be adopted.

The sensor values detected with the eyeball motion detector 41 and the electroencephalogram detector 42 are outputted to the cognitive and judgement ability determining unit 33 via a radio communication unit 39 provided on the helmet 38 and a radio communication unit 40 provided in the two-wheeled motor vehicle 1a. The radio communication units 39 and 40 are used for communicating information between the helmet 38 and the two-wheeled motor vehicle 1a. Accordingly, the four-wheeled motor vehicle has no need to include the units.

The eyeball motion detector 41 may be an eyeball camera for imaging the eyeball motions of the driver, or an electrode patch configured to detect the eyeball motions with electrical activity. Examples of a method of detecting the eyeball motions with the electrical activity include electrooculography (EOG). The eyeball motions of the driver are detected, and accordingly the arousal degree of the driver can be detected. The arousal degree is an evaluation criterion of the cognitive and judgement ability of the driver. Other than direct detection of the eyeball motions, detection of the eyeball motions of the driver may be performed by taking an image of a driver's eye and processing the taken image. Besides the eyeball motions, blinks of the driver's eye may be detected through image processing. The arousal degree of the driver is detectable with a frequency or a magnitude of the eyeball motions and the blinks as an index.

The electroencephalogram detector 42 can evaluate the cognitive and judgement ability of the driver directly with a type, a waveform, and a magnitude of the electroencephalogram to be detected. Alternatively, the electroencephalogram detector 42 can evaluate the cognitive and judgement ability through detecting the arousal degree of the driver. As disclosed in Patent Literature 2, detection of a lambda response and auditory P300 allows detection of an amount of a mental work load on a perceptual-kinetic system and a perceptual-central processing system of the driver. Moreover, detection of α-waves and β-waves achieves detection of the arousal degree of the driver.

The vehicle state detector 32 is formed by sensors configured to detect the traveling states of the vehicles. For instance, the vehicle state detector 32 includes a gyroscope 43, a steering angle sensor 44, a stroke sensor 45, a wheel speed sensor 46 provided on the front wheel 7, and a GPS (Global Positioning System) 47 configured to determine a position of the vehicle.

The gyroscope 43 is disposed on the fuel tank 9. The gyroscope 43 detects angular speeds and angles in triaxial directions of yaw, roll and pitch of the two-wheeled motor vehicle 1a. That is, the gyroscope 43 detects a yaw rate, a yaw angle, a roll rate, a roll angle, a pitch rate and a pitch angle of the two-wheeled motor vehicle 1a. The steering angle sensor 44 is provided on the upper end of the front fork 6 to detect a steering angle as a rotation angle of the steering shaft 4.

The stroke sensor 45 is provided on the front forks 6 to detect amounts of expansion and contraction of the front forks 6. The stroke sensor 45 further calculates caster angles of the front forks 6 based on these amounts of expansion and contraction. When the front fork 6 is expanded and contracted by a hydraulic suspension, the stroke sensor 7 may calculate the caster angles by detecting a hydraulic pressure of the suspension. The wheel speed sensor 46 detects rotating speeds of the front wheel 7. The wheel speed sensor 46 further calculates vehicle speeds of the two-wheeled motor vehicle based on the rotating speeds. The detection values of various sensors are outputted to the driving skill determining section 34.

A GPS 47 is disposed on a forward portion of the vehicle, and detects the traveling position of the vehicle, i.e., the position information on the latitude/longitude, and the traveling direction of the vehicle. The detection values of the GPS 47 are transmitted to the driving skill determining section 34, the relative position detector 26, and the communication unit 22. The GPS 47 corresponds to the traveling position detector in the present invention.

The cognitive and judgement ability determining unit 33 determines the cognitive and judgement ability of the driver based on the active state of the driver detected with the active state detector 31. In Embodiment 1, a score is given to the arousal degree of the driver based on the detection result of the eyeball motions received from the eyeball motion detector 41. Moreover, a score is given to the cognitive and judgement ability of the driver based on the detection result of the electroencephalogram received from the electroencephalogram detector 42. For instance, an amount of a mental work load on a perceptual-kinetic system and a perceptual-central processing system is detected using the method disclosed in Patent Literature 2. The score is given under the assumption that the cognitive and judgement ability becomes lower as the amount of the work load increases and the cognitive and judgement ability becomes higher as the amount of the work load decreases.

These scores are multiplied with weighting factors and the sum is calculated, whereby an overall score for cognitive and judgement is obtained that represents the cognitive and judgement ability of the driver comprehensively. Then, the overall score for cognitive and judgement is compared with a threshold set in advance, whereby the cognitive and judgement ability of the driver is determined in a step manner. In Embodiment 1, one threshold set in advance is prepared for determination of the cognitive and judgement ability by two stages "high" and "low". Here, more thresholds may be prepared for determination of the cognitive and judgement ability in more stages.

Here, the overall score for cognitive and judgement is calculated. However, this is not limitative. For instance, the cognitive and judgement ability may be determined from the arousal degree or an amount of the mental work load individually. The overall score for cognitive and judgement and the cognitive and judgement ability determined in the two stages are outputted to the communication unit 22, the driver state database 23, the adjacent vehicle determining unit 27, and the state information generating unit 28. Upon completion of determining the cognitive and judgement ability, a signal for completion of determining the cognitive and judgement ability is transmitted to the state detection determining unit 24.

The driving skill determining unit 34 gives a score to the driving skill of the driver based on state quantities of the vehicle received from the gyroscope 43, the steering angle sensor 44, the stroke sensor 45, the wheel speed sensor 46, and the GPS 47. Moreover, the scored driving skill is compared with the threshold set in advance to determine the driving skill in a step manner. In Embodiment 1, one threshold set in advance is prepared for determination of the driving skill by the two stages "high" and "low". Here, more thresholds may be prepared for determination of the cognitive and judgement ability in more stages.

For instance, the method disclosed in Patent Literature 1 may be adopted as the method of determining the driving skill. Specifically, a vehicle stability score for evaluating stability of the vehicle and a turning characteristic score for evaluating a turning characteristic are calculated based on the state quantities of the vehicle. In addition, a driving overall score is calculated from the vehicle stability score and the turning characteristic score to be used for evaluating the driving skill of the driver. Moreover, instead of calculating the driving overall score, the vehicle stability score or the turning characteristic score may be used individually for evaluating the driving skill of the driver. The driving overall score and the determination result of the driving skill determined by the two stages are transmitted to the communication unit 22, the driver state database 23, the adjacent vehicle determining unit 27, and the state information generating unit 28. Moreover, upon completion of determining the driving skill, a signal for completion of determining the driving skill is transmitted to the state detection determining unit 24.

### 2.2 Communication Unit

The communication unit 22 transmits and receives the driver state information and the traveling position information of various vehicles to and from the communication units 22 provided in the other vehicles traveling around the own vehicle. Specifically, the communication unit 22 of the own vehicle transmits the driver state information and the traveling position information of the own vehicle to the communication units 22 of the other vehicles, and receives the driver state information and the traveling position information of the other vehicles from the communication units 22 of the other vehicles. The received driver state information and the traveling position information of the other vehicles are outputted to the driver state database 23 and the state information generating unit 28. The received traveling position information of the other vehicles is also outputted to the relative position detector 26. Upon receipt of the driver state information and the traveling position information of the other vehicles, the communication unit 22 transmits each signal of completing the reception of the information to the state detection determining unit 24. The driver state information and the traveling position information each contains vehicle information representing ID information and a type of the vehicle. The driver may register numbers on a number plate of the vehicle as the ID information. Alternatively, the ID information may be the numbers applied in advance individually to the driver state sharing device 20. Examples of the communication unit 22 include a radio communication device.

### 2.3 Other Construction of Driving State Sharing Device

The driver state database 23 includes memory, and stores the overall score for cognitive and judgement, the determination result of the cognitive and judgement ability, the driving overall score, and the determination result of the driving skill of the own vehicle received periodically. The driver state database 23 also stores the overall scores for cognitive and judgement, the determination results of the cognitive and judgement ability, the driving overall scores, and the determination results of the driving skills of the other vehicles received via the communication unit 22.

The state detection determining unit 24 determines whether or not the signal of completing determination of the cognitive and judgement ability and the driving skill is inputted from the cognitive and judgement ability determining unit 33 and the driving skill determining unit 34, respectively, thereby determining whether or not the detection of the cognitive and judgement ability and the driving skill of the own vehicle is completed. The state detection determining unit 24 also determines whether or not the signals of completing reception of the driver state information and the traveling position information of the other vehicles are inputted from the communication unit 22, thereby determining whether or not the detection of the cognitive and judgement ability and the driving skills of the other vehicles are completed. When it is determined that the detection is not completed, a command is issued to output the updated known detection results stored in the driver state database 23 to the state information generating unit 28 and the driver state transition calculating unit 25.

The driver state transition calculating unit 25 calculates a transition of the driving skill and the cognitive and judgement ability of the driver. The transition of the driver state is calculated as under. That is, the current overall score for cognitive and judgement ability and the driving overall score are compared with the past overall score for cognitive and judgement ability and the driving overall score, respectively, both being stored in the driver state database 23. When the score increases by a certain value or more set in advance, the transition is determined "enhanced". In contrast to this, when the score decreases by a certain value or more set in advance, the transition is determined "degraded". When no increase or decrease occurs by a certain value or more, the transition is determined "static".

As for another calculation of the transition of the driver state, a linear regression equation is calculate by a least square method with a unit time being an independent variable and the overall scores for cognitive and judgement and the driving overall scores during a certain period from the past to the current stored in the driver state database 23 being dependent variables. Then, a magnitude of the regression coefficient may be used for determining the transition. The determined transition result is transmitted to the state information generating unit 28.

The relative position detector 26 detects relative positions of the other vehicles relative to the own vehicle based on the traveling position information of the own vehicle received from the GPS 47 and the traveling position information of the other vehicles received via the communication units 22. A distance and a relative angle between the own vehicle and each of the other vehicles are calculated as the relative position. The calculated relative position between the own vehicle and each of the other vehicles is outputted to the state information generating unit 28 and the adjacent vehicle determining unit 27.

The adjacent vehicle determining unit 27 determines the other vehicles adjacent to the own vehicle based on the relative positions between the own vehicle and the other vehicles detected by the relative position detector 26. Here, a distance criterion used for determining whether or not the own vehicle is adjacent to the other vehicles is determined in advance in a step manner based on the determination results from the driving skill determining unit 34. Specifically, when the determination result with the "high" driving skill is inputted, a criterion for a short distance is adopted. When the determination result with the "low" driving skill is inputted, a criterion for a long distance is adopted. Consequently, with the "low" driving skill of the driver, the other vehicles are determined as nearby vehicles sooner than the case with the "high" driving skill even when the other vehicles are away from the own vehicle.

Moreover, the distance criterion may be set by four stages in association with the determination results of the cognitive and judgement ability in addition to the determination result of the driving skill. Specifically, the distance criterion used for determining the adjacent vehicle may be variable for the cases when the driver states are both "high", when the driver skill is "low", when the cognitive and judgement ability is "low", and the driver states are both "low". In this manner, the criterion for determining whether or not the other vehicles approach the own vehicle is variable depending on the determination result of the driver state.

Moreover, besides the distance criterion used for determining whether or not the own vehicle is adjacent to the other vehicles, the adjacent vehicle determining unit 27 may provide a warning distance criterion used for determining whether or not the own vehicle and the other vehicles are within a warning distance. Here, the warning distance criterion is a criterion for the shortest distance set in advance for warning the driver of the own vehicle of a near collision to the other vehicles. These determination results of the adjacent vehicle determining unit 27 are outputted to the state information generating unit 28.

The state information generating unit 28 generates the state information presented to the driver in accordance with the determination result of the driver state. The state information generating unit 28 includes a presentation mode selecting unit 35 configured to select a mode for presenting the state information to the driver in accordance with the determination result of the driver state, and a presentation information generating unit 36 configured to generate the state information presented to the driver in response to the selected mode.

The presentation mode selecting unit 35 selects the mode to be presented to the driver based on the determination result of the cognitive and judgement ability and the driving skill of the driver. In Embodiment 1, four types of the state information to be presented to the driver are prepared depending on the determination result of the driving skill and the cognitive and judgement ability of the driver. The optimal type is selected from the four types of presentation mode of the state information. The selected presentation mode is outputted to the presentation information generating unit 36.

The presentation information generating unit 36 generates the state information presented to the driver based on the selection result by the presentation mode selecting unit 35. Four types of state information can be generated depending on the cognitive and judgement ability and the driving skill of the driver. The generated state information is outputted to the information presentation unit 29. In Embodiment 1, the cognitive and judgement ability determining unit 33, the driving skill determining unit 34, the state detection determining unit 24, the driver state transition calculating unit 25, the relative position detector 26, the adjacent vehicle determining unit 27, and the state information generating unit 28 are incorporated into a microprocessor 30 in one chip to be included in the two-wheeled motor vehicle 1a.

The information presentation unit 29 includes a monitor 19 configured to present the state information from the state information generating unit 28 visually, and a speaker 48 configured to present the information auditory, and a vibrator 49 configured to present the information tactually.

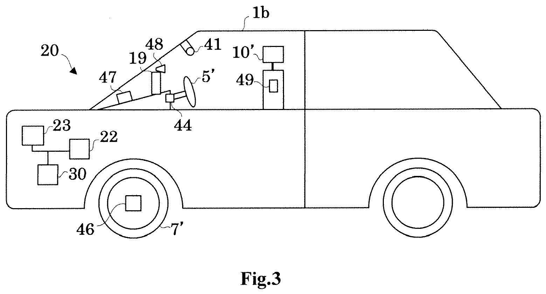

The following describes the case of a four-wheeled motor vehicle with reference to Figure 3. Figure 3 is a side view illustrating an outline construction of a four-wheeled motor vehicle with the driving state sharing device. The four-wheeled motor vehicle 1b has front wheels 7' with wheel speed sensors 46. The wheel speed sensor 46 detects rotation speeds of the front wheel 7', and calculates the vehicle speeds of the vehicle based on the rotation speeds. The four-wheeled motor vehicle 1b also includes a steering angle sensor 44 that detects rotation angles of a handlebar 5', and a GPS 47 that detects traveling positions of vehicle. The steering angle sensor 44, the wheel speed sensor 46, and the GPS 47 form the vehicle state detector 32.

An eyeball motion detector 41 configured to detect the eyeball motions of the driver is provided on a rear-view mirror (not shown). A monitor 19 and a speaker 48 are provided on a forward portion of the handle 5'. The vibrator 49 is embedded in the seat 10'. The eyeball motion detector 41 forms the active state detector 31. The monitor 19, the speaker 48, and the vibrator 49 form the information presentation unit 29. The four-wheeled motor vehicle 1b further includes a communication unit 22 configured to transmit and receive information on the driving states to and from the other vehicles, and a driver state database 23 configured to store the driver states of the own vehicle and the other vehicles. The cognitive and judgement ability determining unit 33, the driving skill determining unit 34, the state detection determining unit 24, the driver state transition calculating unit 25, the relative position detector 26, the adjacent vehicle determining unit 27, and the state information generating unit 28 are incorporated into the microprocessor 30 in one chip to be included in the four-wheeled motor vehicle 1b.

### 3. Guidance of Driving State Information

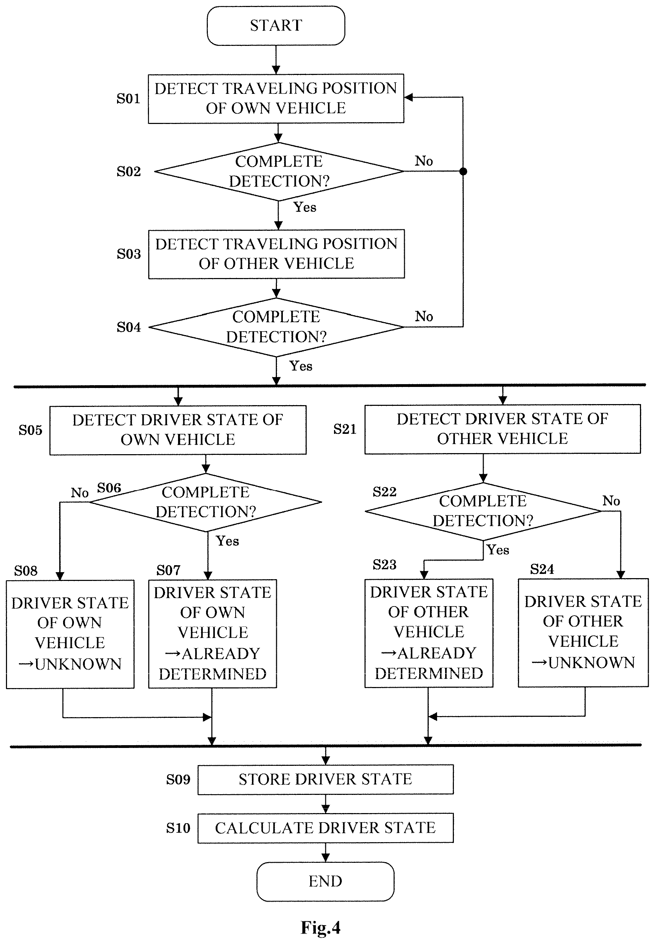

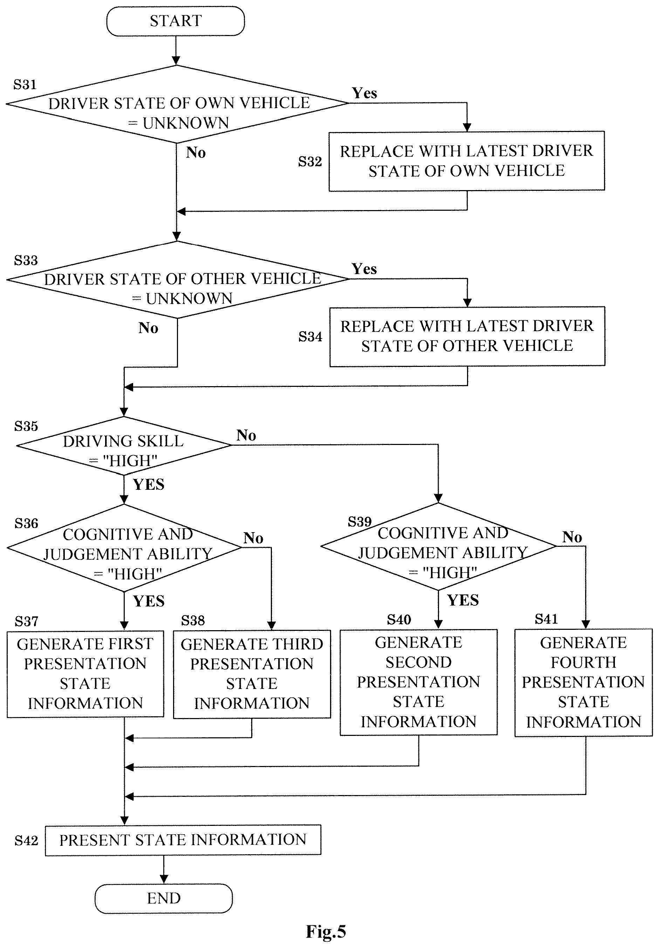

The following describes presentation of the shared driving state information with reference to Figures 4 and 5. Figures 4 and 5 are flow charts each illustrating processing the state information. The processing from detection to presentation of the driving state about the driver state and the traveling position of each vehicle is roughly divided into two processes of detecting the driving state and presenting the detected driving state. Firstly, the process of detecting the driving state is to be described with reference to Figure 4.

### 3.1 Detection of Driving State

Firstly, the GPS 47 detects the traveling position and the traveling direction of the own vehicle (step S01), and outputs the detected traveling position information to the relative position detector 26. The relative position detector 26 reads a sensor output value of the traveling position information detected with the GPS 47. The relative position detector 26 determines whether or not the detection of the traveling position information is completed depending on whether or not the input of the sensor output value from the GPS 47 is completed (step S02). When the detection is not completed (No in the step S02), the relative position detector 26 again reads a sensor output value from the GPS 47.

Upon completion of reading the sensor output value from the GPS 47 and determination that the detection of the traveling position information of the own vehicle is completed (Yes in the step S02), the relative position detector 26 reads the traveling position information of the other vehicles via the communication unit 22 to detect the traveling position information of the other vehicles (step S03). When reading the traveling position information of the other vehicles is failed, the relative position detector 26 determines that the detection of the traveling position information of the other vehicles is not completed (No in step the S04). Then, the traveling position of the own vehicle is detected again. (step S01). When completing reading of the traveling position information of the other vehicles via the communication unit 22, the relative position detector 26 determines that the detection of the traveling position information of the other vehicles is completed (Yes in the step S04). Then, the relative position detector 26 issues an command to the cognitive and judgement ability determining unit 33 and the driving skill determining unit 34, respectively, to start determination of a cognitive ability and a driving skill. The relative position detector 26 also issues a command to the communication unit 22 to receive the detection results of the cognitive and judgement ability and the driving skills of the other vehicles. The relative position detector 26 also calculates a relative position relationship between the own vehicle and the other vehicles.

As noted above, when the traveling positions of the own vehicle and other vehicles are detected, the cognitive and judgement ability and the driving skill of the own vehicle are determined simultaneously with reading of the determination results of the cognitive and judgement ability and the driving skills of the other vehicles.

The cognitive and judgement ability determining unit 33 inputs the sensor output values of the eyeball motion and electroencephalogram from each detector of the active state detector 31, and calculates the cognitive and judgement ability overall score for determining the cognitive and judgement ability. Moreover, the driving skill determining unit 34 inputs the each detection values from the vehicle state detector 32 for determining the driving skill. As noted above, the cognitive and judgement ability and the driving skill are determined, whereby the driver state of the own vehicle is detected (step S05).

Next, the cognitive and judgement ability determining unit 33 and the driving skill determining unit 34 each output a signal of completing the determination to the state detection determining unit 24. The state detection determining unit 24 detects the signal of completing the determination from the cognitive and judgement ability and the driving skill, thereby determining whether or not the detection of the driver state of the own vehicle is completed (step S06). Such determination is performed to the cognitive and judgement ability and the driving skill individually. When detecting the signal of completing the determination of the cognitive and judgement ability and the driving skill of the own vehicle (Yes in the step S06), the state detection determining unit 24 determines that the driver state of the own vehicle has been determined (step S07). When not detecting the cognitive and judgement ability or the driving skill (No in the step S06), the state detection determining unit 24 determines that the cognitive and judgement ability or the driving skill with no signal input of completing the determination has been determined unknown (step S08).

Simultaneously with the steps S05 to S08, the communication unit 22 reads the determination results of the cognitive and judgement abilities and the driving skills of the other vehicles, thereby detecting the driver states of the other vehicles (step S21). When the communication unit 22 completes reading the cognitive and judgement abilities and the driving skills of the other vehicles, a signal of completing receipt is outputted to the state detection determining unit 24. The state detection determining unit 24 detects input of the signal of completing the receipt of the cognitive and judgement abilities and the driving skills of the other vehicles, thereby determining whether or not the driver states of the other vehicles have been completed (step S22). Such determination is performed to the cognitive and judgement ability and the driving skill individually.

When detecting the input of the signal of completing the receipt of the cognitive and judgement abilities and the driving skills of the other vehicles (Yes in the step S22), the state detection determining unit 24 determines that the driver states of the other vehicles have been detected (step S23). When not detecting the input of the signal of completing the receipt of the cognitive and judgement abilities and the driving skills of the other vehicles (No in the step S22), the state detection determining unit 24 determines that the cognitive and judgement abilities or the driving skills of the other vehicles with no signal input of completing the receipt has been determined unknown (step S24).

The detection results of the cognitive and judgement abilities and the driving skills of the own vehicle and the other vehicles that have been determined detected are stored in the driver state database 23 (step S09). The driver state transition calculating unit 25 calculates the transitions of the cognitive and judgement abilities and driving skills of the own vehicle and the other vehicles based on the scores about the cognitive and judgement abilities and the driving skills of the own vehicle and the other vehicles stored in the driver state database 23. The processes of detecting the driving state information containing the driver state information and traveling position information of the various vehicles are now completed.

### 3.2 Presentation of Driving State

The following describes presenting the detected driving state with reference to Figure 5. The state detection determining unit 24 determines whether or not the driver state of the own vehicle is unknown (step S31). When it is determined that the detection of the driver state of the own vehicle, i.e., the detection of the cognitive and judgement ability or the driving skill of the own vehicles is completed through the step S07 (No in the step S31), and thus the detection has already been done, the process proceeds to a step of determining the driver states of the other vehicles. In contrast to this, when it is determined that the detection of the driver state of the own vehicle, i.e., the detection of the cognitive and judgement ability or the driving skill of the own vehicles is unknown through the step S08 (Yes in the step S31), the detected result of the driver state having been determined unknown is replaced with that of the latest driver state stored in the driver state database 23, and are output to the presentation information generating unit 46 (step S32).

Next, the state detection determining unit 24 determines whether or not the driver states of the other vehicles are unknown (step S33). When it is determined through the step S23 that the driver states of the other vehicles, i.e., the detection of the cognitive and judgement abilities or the driving skills of the other vehicles is completed and thus the detection has already been done (No in the step S33), the process proceeds to a step of selecting the presentation information. In contrast to this, when it is determined through the step S24 that the detection of the driver state of the other vehicles, i.e., the detection of the cognitive and judgement abilities or the driving skills of the other vehicles is unknown (Yes in the step S33), the detected results of the driver states of the other vehicles having been determined unknown are replaced with those of the latest driver states of the other vehicles stored in the driver state database 23, and are output to the presentation information generating unit 36 (step S34).

Next, the presentation mode selecting unit 35 selects a presentation mode in response to the driving skill and the cognitive and judgement ability of the driver of the own vehicle. It is determined based on the determination result of the driving skill from the driving skill determining unit 34 whether or not the driving skill of the driver is "high" (step S35). When the driving skill is determined "high" (Yes in the step S35), it is determined based on the determination result of the cognitive and judgement ability from the cognitive and judgement ability determining unit 33 whether or not the cognitive and judgement ability of the driver is "high" (step S36). When the cognitive and judgement ability is determined "high" (Yes in the step S36), i.e., when both the driving skill and the cognitive and judgement ability are determined "high", a mode for generating first presentation state information is selected (step S37). When the cognitive and judgement ability is not determined "high" (No in the step S36), i.e., when the driving skill is determined "high" while the cognitive and judgement ability is determined "low", a mode for generating third presentation state information is selected (step S38).

When the process returns to the step S35 and the driving skill of the driver is not determined "high" (No in the step S35), it is determined whether or not the cognitive and judgement ability of the driver is "high" based on the determination result of the cognitive and judgement ability from the cognitive and judgement ability determining unit 33 (step S39). When the cognitive and judgement ability is determined "high" (Yes in the step S39), i.e., when the driving skill is determined "low" whereas the cognitive and judgement ability is determined "high", a mode for generating second presentation state information is selected (step S40). Moreover, when the cognitive and judgement ability is not determined "high" (No in the step S39), i.e., when both the driving skill and the cognitive and judgement ability are determined "low", a mode for generating fourth presentation state information is selected (step S41). The presentation mode selected by the presentation mode selecting unit 35 is transmitted to the presentation information generating unit 36. The presentation information generating unit 36 generates presentation information in response to the received presentation mode.

### 3.3 Presentation of First Presentation Information

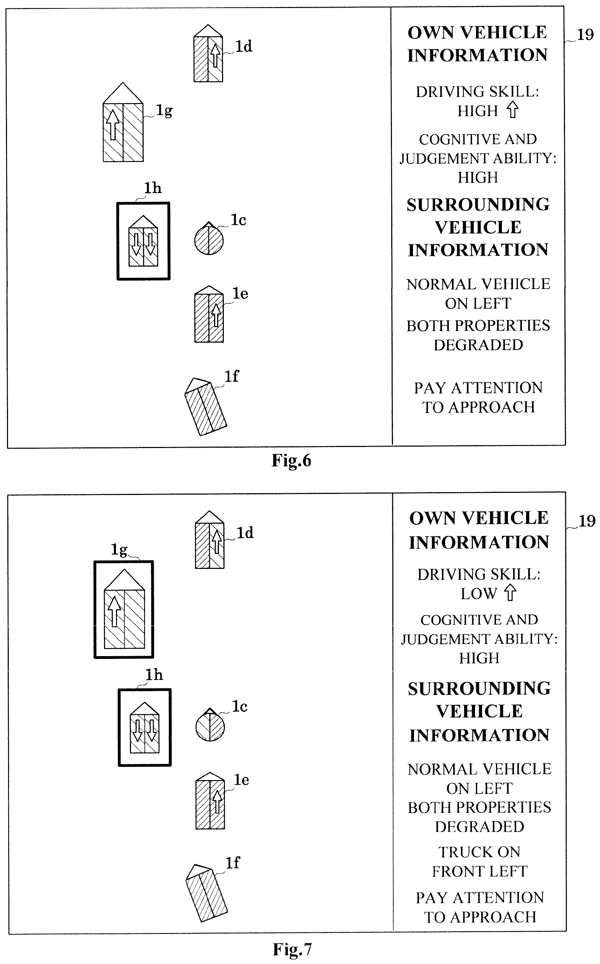

When both the driving skill and the cognitive and judgement ability of the driver of the own vehicle are determined "high", the presentation information generating unit 36 generates the first presentation information and presents it on the monitor 19. The first presentation information to be presented is described with reference to Figure 6. Figure 6 illustrates the first presentation information to be presented on the monitor 19.

Character information of the own vehicle and the other vehicle is presented on the right of the monitor 19, and the relative positions of the own vehicle and the other vehicles are presented on the left of the monitor 19. A driver state of the own vehicle driver is presented on the upper right of the monitor 19. The driving skill and the cognitive and judgement ability are presented as the driver state. The result determined by the two stages is presented in different colors. For instance, the "high" determination result is presented in blue, while the "low" determination result is presented in "red".

Moreover, a transition is each presented on the right of the characters representing the determination result of the driver state. For instance, the transition is presented with an up-pointing arrow when determined "enhanced" by the driver state transition calculating unit 45, with a down-pointing arrow when determined "degraded", and with no arrow when determined "static".

The own vehicle is presented on the left of the monitor 19 with an icon 1c, and the other vehicles therearound are presented with icons 1d to 1h in response to the detected relative positions. Moreover, sizes and shapes of the icons 1c to 1h each correspond to the type of vehicle based on the information on various vehicles. For instance, the two-wheeled motor vehicle 1a is presented with a circle icon 1c, and the four-wheeled motor vehicle 1b is presented with a rectangular icon 1d. Moreover, a heavy vehicle such as a truck is presented with an icon larger than that of the normal vehicle. Moreover, convex parts of the icons 1c to 1h each represent a traveling direction of the vehicle. The driver can recognize that the vehicles with the icons 1c to 1h travel in the same direction and the vehicle with the icon 1f switches lanes.

The icons 1c to 1h are color-coded in accordance with the driver states of the drivers. The left halves of the icons 1c to 1h are color-coded in accordance with the driving skills of the drivers, the right halves thereof are color-coded in accordance with the cognitive and judgement abilities. In either case above, the "high" determination result is presented in blue, and the "low" determination result is presented in red. Moreover, the transition of the driving state overlaps with each of the icons 1c to 1h. When the transition is determined "enhanced", an up-pointing arrow overlaps with each of the icons 1c to 1h. When the transition is determined "degraded", a down-pointing arrow is presented. When the transition is determined "static", no arrow is presented.

Moreover, when at least one of the driving skill and the cognitive and judgement ability of the driver of the vehicle that is determined as an adjacent vehicle by the adjacent determining unit 27 is "low", the corresponding other vehicle is determined as a problematic vehicle and is highlighted with the corresponding icon 1h enclosed with a red frame. In addition, information on the vehicle adjacent to the own vehicle with the "low" driver state is presented on the lower right of the monitor 19 with a warning. The information presented with the warning is, for example, the type of the vehicle, the transition of the driver state, and a warning depending on the driving state of the problematic other vehicle. Here, since the driver state of the vehicle with icon 1e includes both the "high" driving skill and the "high" cognitive and the judgement ability, the vehicle is not enclose with a red frame although it is determined as an adjacent vehicle.

### 3.4 Presentation of Second Presentation Information

When the own vehicle driver has a "low" driving skill and a "high" cognitive and judgement ability, the presentation information generating unit 36 generates second presentation information and presents it on the monitor 19. The second presentation information to be presented is described with reference to Figure 7. Figure 7 illustrates the second presentation information presented on the monitor 19. Here, the traveling states and the driver states of the other vehicles around the own vehicle are same as the first presentation information in Figure 6.

The second presentation information differs from the first presentation information in that a distance between the own vehicle and the other vehicle determined as an adjacent vehicle is longer than in the first presentation information. When the driving skill of the own vehicle is "low", the adjacent vehicle determining unit 27 adopts a criterion for a long distance as an evaluation criterion. Accordingly, the other vehicle is presented as an adjacent vehicle in an area larger than that where the vehicle is presented as the adjacent vehicle in the first presentation information. In the second presentation information, the icon 1g of the other vehicle that travels ahead and is not presented with a frame in the first presentation information is presented with a frame. Moreover, information on the vehicle newly presented with the frame is given with a warning for character information of the surrounding vehicles.

As noted above, generation and presentation of the second presentation information in this manner achieves sooner recognition of the problematic vehicle by the driver. Although the driver has the low driving skill, the sooner recognition of the problematic vehicle allows avoidance behavior of the driver to the problematic vehicle with plenty of time to spare.

### 3.5 Presentation of Third Presentation Information

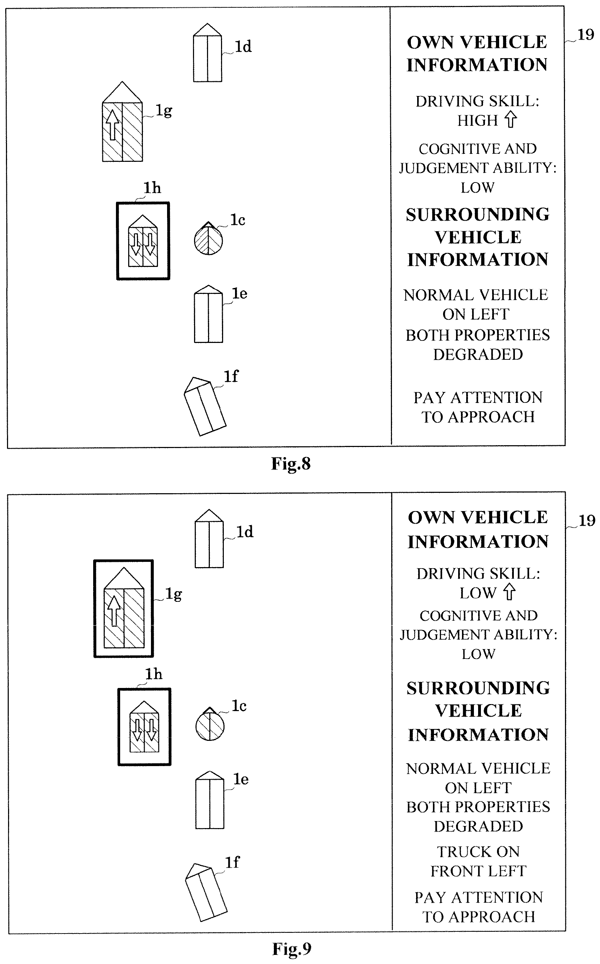

When the driver of the own vehicle has a "high" driving skill and a "low" cognitive and judgement ability, the presentation information generating unit 36 generates third presentation information and presents it through the monitor 19 and the speaker 48. The third presentation information to be presented is described with reference to Figure 8. Figure 8 illustrates the third presentation information presented on the monitor 19. Here, the traveling states and the driver states of the other vehicles around the own vehicle are same as the first presentation information in Figure 6.

When the driver has a "low" cognitive and judgement ability, the driver needs time to understand many pieces of information, and accordingly, the third presentation information includes less volume of information to be presented than the first presentation information. In other words, the third presentation information to be presented has high urgency. For the information with high urgency, only the surrounding vehicles determined that the drivers have both the "low" driving skills and the "low" cognitive and judgement abilities are presented with icons in a color representing a "low" property, i.e., in red. Moreover, upon giving warning information, auditory presentation from the speaker 48 is used along with visual presentation by an image from the monitor 19. For instance, the third presentation information in Figure 8 is presented on the monitor 19, and simultaneously voice information "please pay attention to the vehicle on the left" is outputted from the speaker 48.

As noted above, presenting the third presentation information in this manner allows the driver to be particularly attentive for the information requiring special attention. Accordingly, the information requiring attention can be obtained efficiently even when the driver has a low cognitive and judgement ability and thus has difficulty in recognizing a large volume of information with a short period of time. Consequently, the driver can recognize the problematic vehicle. As a result, the driver can take suitable avoidance behavior such as not to approach the problematic vehicle or to leave a sufficient distance between the vehicles.

### 3.6 Presentation of Fourth Presentation Information

When it is determined that the driver of the own vehicle has both a "low" driving skill and a "low" cognitive and judgement ability, the presentation information generating unit 36 generates fourth presentation information and presents it through the monitor 19 and the speaker 48. The fourth presentation information to be presented is described with reference to Figure 9. Figure 9 illustrates the fourth presentation information presented on the monitor 19. Here, the traveling states and the driver states of the other vehicles around the own vehicle are same as the first presentation information in Figure 6.

Since the driver has both the "low" driving skill and the "low" cognitive and judgement ability, the fourth presentation information contains both characteristics of the second presentation information and the third presentation information. That is, when the driving skill of the own vehicle is determined "low", the adjacent vehicle determining unit 27 adopts a criterion for a long distance as an evaluation criterion. Accordingly, the other vehicle is presented as an adjacent vehicle in an area larger than that where the vehicle is presented as the adjacent vehicle in the first presentation information. In the fourth presentation information, the icon 1g of the other vehicle that is not presented with a frame in the first presentation information is presented with a frame. Moreover, information on the vehicle newly presented with the frame is given with a warning for character information of the surrounding vehicles.

Moreover, the cognitive and judgement ability of the driver is "low", and accordingly the information of the fourth presentation information to be presented has high urgency, which is similar to the third presentation information. Moreover, upon giving warning information, auditory presentation from the speaker 48 is used along with visual presentation by an image from the monitor 19. For instance, the fourth presentation information in Figure 9 is presented on the monitor 19, and simultaneously voice information "please pay attention to the vehicles on the left and on the front left" is outputted from the speaker 48.

As noted above, presenting the fourth presentation information in this manner allows efficient obtainment of the information requiring attention even when the driver has a low cognitive and judgement ability and thus has difficulty in recognizing a large volume of information with a short period of time. Consequently, the driver can recognize the problematic vehicle. Moreover, the driver can recognize the problematic vehicle sooner. Accordingly, the driver with the low driving skill can take avoidance behavior of to the problematic vehicle with plenty of time to spare. As a result, the driver can take suitable avoidance behavior such as not to approach the problematic vehicle or to leave a sufficient distance between vehicles.

Moreover, when the adjacent vehicle determining unit 27 transmits the determination result of near collision against the other vehicle, the presentation information generating unit 36 may give a warning of near collision against the other vehicle to the driver by causing the vibrator 49 embedded within the seat 10 to vibrate. When the presentation information is presented on an information presentation portion of each information presentation unit 29, guidance of the driving state information is completed and detection of the driving state starts again from the step S01.

As noted above, with the driving state sharing device 20 according to Embodiment 1, the drivers of the vehicles on the road traffic environment can share the position information and the driver states of the vehicles. Consequently, the driver of the own vehicle can recognize the driver states of the other vehicles surrounding the own vehicle that are unable to be determined only with visual judgement. As a result, the driver of the own vehicle can take driving operation and avoidance behavior depending on the driver states of the other vehicles surrounding the own vehicle.

Moreover, the drivers of the vehicles on the road traffic environment can share the position information of various vehicles, the driving skills and the cognitive and judgement abilities to the road traffic environment of the drivers. Consequently, when the driver with a low driving skill or a low cognitive and judgement ability drives the vehicle adjacent to the own vehicle, the driver of the own vehicle can take avoidance behavior in advance such as avoidance of unreasonable passing behavior or careless approach. This leads to suppression in contact with the other vehicles. In addition, the drivers of the vehicles can share the information on the driving skill of each driver. This causes a high driving skill to be a status symbol, and thus enhances a motivation for improving the driving skill of the driver.

Moreover, contents and a method of presenting the driver states of the other vehicles vary depending on the driver states of the own vehicle and the other vehicles. Consequently, the driver states of the other vehicles can be presented to the driver of the own vehicle by a suitable volume of information at a suitable strength. When the driver of the own vehicle has a low cognitive and judgement ability, the information with high urgency is presented. This causes reduction in volume of information to be processed by the driver, achieving suitable avoidance behavior.

Moreover, when the drivers of the other vehicles with low driving skills and low cognitive and judgement abilities drive the vehicles around the own vehicle, the driver states of the other vehicles are presented to the driver of the own vehicle at high strength of stimulus. Consequently, the driver can readily recognize that the information includes urgency or high priority. As a result, the driver can take suitable driving and avoidance behavior.

Moreover, the content or the method of presenting the driver states of the other vehicles is selected depending on the traveling positions of the own vehicle and the other vehicles. Consequently, the driver states of the other vehicles can be presented to the driver of the own vehicle at a suitable timing. When the driver of the own vehicle has a low driving skill or a low cognitive and judgement ability, the driver states of the other vehicles are presented at an early timing, i.e., at a timing when distances to the other vehicles are somewhat far. Consequently, the driver of the own vehicle can cope with the other vehicles therearound as necessary.

The drivers of the vehicles on the road traffic environment share the transitions of the driver state of the driver, thereby allowing determination of whether the driver states of the other vehicles change from a condition suitable for driving to that unsuitable for driving or vice versa. Accordingly, although the driver states of the other vehicles change from the condition suitable for driving to the unsuitable condition, the driver of the vehicle can expect a deviation from a condition of traveling the vehicle normally. This achieves elimination of avoidance behavior such as unreasonable passing behavior or careless approach, thereby leading to reduction in contact.

### Embodiment 2

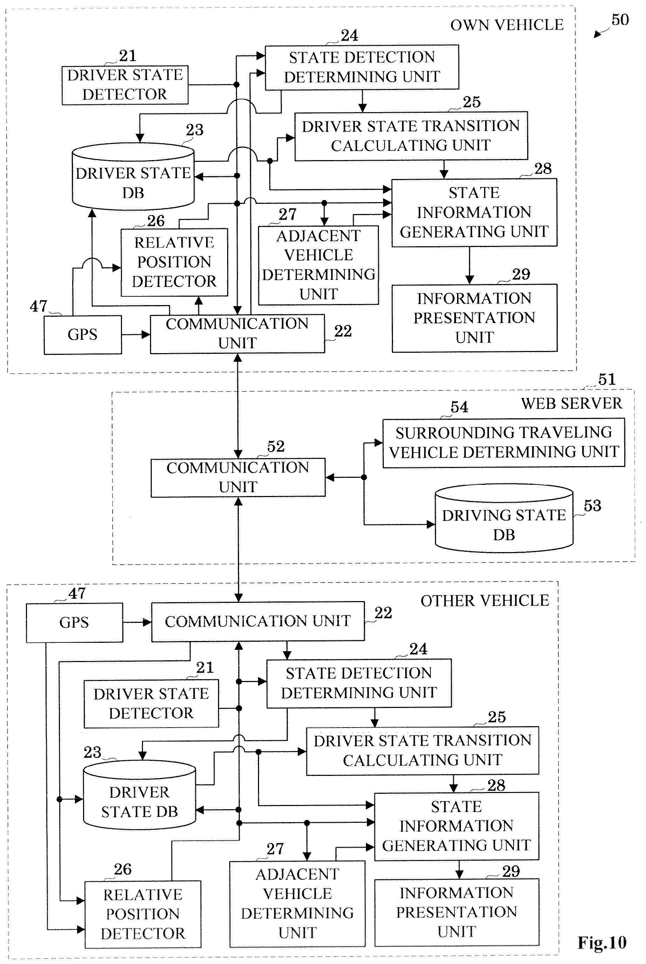

The following describes a driving state sharing system according to Embodiment 2 with reference to Figure 10.

As noted above, the information on the driver state and traveling position information of each vehicle are transmitted and received between the own vehicle and each of the other vehicles via the communication units. Embodiment 2 discloses a driving state sharing system configured to transmit and receive the information on the driver state and traveling position information also via a web server.

Figure 10 is a block diagram illustrating a driving state sharing system according to Embodiment 2. In Figure 13, since the elements having the same numerals as those in Embodiment 1 are same construction, description thereof is to be omitted. In Embodiment 2, transmitting and receiving the driver states and traveling positions between the own vehicle and the other vehicles in Embodiment 1 is performed via a web server. Consequently, the constructions other than the driving state sharing device and vehicle described hereinafter are same as those in Embodiment 1.

Embodiment 2 has the feature that the driver states and the traveling positions of the own vehicle and the other vehicles are uploaded via the communication units 22 to a web server 51, and information on the other vehicles traveling around the own vehicle is downloaded from the web server 51 to the communication unit 22 of the own vehicle. The web server 51 includes a communication unit 52, a driving state database 53, and a surrounding traveling vehicle determining unit 54.

The communication unit 52 receives a driver state and a traveling position to which ID information on each vehicle uploaded from the communication unit 22 of each vehicle is given, and the driving state database 53 stores them. The driving state database 53 stores the information on the uploaded driver states and the traveling positions of all the vehicles. The surrounding vehicle determining unit 54 determines a vehicle traveling around the vehicles based on the uploaded traveling positions of the vehicles. The determination is made based on a criterion for an extent of the uploaded information on the driving states of various vehicles to be downloaded. For instance, the own vehicle 1c in Embodiment 1 (Figure 6) is determined using a range of distance containing the other vehicles 1d to 1h as a criterion. The information on the driving state of the vehicle determined as a surrounding traveling vehicle by the surrounding vehicle determining unit 54 is downloaded to the driver state database 23 via the communication unit 22.

As noted above, with the driving state sharing system 50 according to Embodiment 2, the drivers of the vehicles on the road traffic environment can share the position information and the driver states of the vehicles. Consequently, the driver of the own vehicle can recognize the driver states of the other vehicles around the own vehicle that are unable to be determined only with visual judgement. As a result, the driver of the own vehicle can take driving operation and avoidance behavior depending on the driver states of the other vehicles around the own vehicle. Here, the driver database 53 in the web server 51 accumulates all the driver states and the traveling positions of the traveling vehicles.

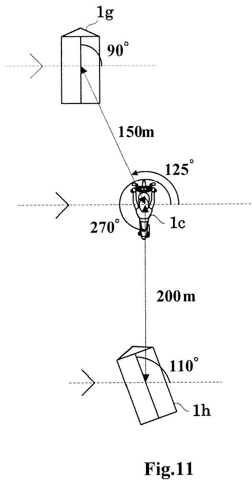

The present invention is not limited to the foregoing embodiments, but may be modified within the scope of the appended claims, and in particular as follows.
1. In the foregoing embodiments, the distance and the relative angles between the own vehicle and the other vehicles are illustrated as a relative position relationship. However, this is not limitative. For instance, as in Figure 11, a distance and a relative angle between the own vehicle 1c and the other vehicles 1g and 1f may be presented with characters to the driver.
2. In the foregoing embodiments, the traveling positions of the other vehicles are detected by receiving the detection values of the GPS 47 each provided on the vehicles via the communication units 22. However, this is not limitative. Besides, a distance measuring sensor such as a laser radar sensor may be provided on the own vehicle for measuring a distance between the other vehicle, a direction, and a traveling direction of the own vehicle.
3. In the foregoing embodiments, the information presentation unit 29 and the communication unit 22 are constructed individually. However, this is not limitative. For instance, a cellular telephone or a smartphone provided with a monitor, a speaker, a vibrator, and a communication circuit integratedly may be adopted as the information presentation unit 29 and the communication unit 22.

### Reference Signs List

- 1a: two-wheeled motor vehicle
- 1b: four-wheeled motor vehicle
- 20: driving state sharing device
- 21: driver state detector
- 22: communication unit
- 23: driver state database
- 25: driver state transition calculating unit
- 28: state information generating unit
- 29: information presentation unit
- 33: cognitive and judgement ability determining unit
- 34: driving skill determining unit
- 47: GPS
- 50: driving state sharing system
- 51: web server

## Claims

1. A driving state sharing device (20) that shares driving states of an own vehicle (1c) and other vehicles (1d-1h), comprising:
a driver state detector (21) configured to detect a driver state of the own vehicle (1c);
a traveling position detector (47) configured to detect a traveling position of the own vehicle (1c);
a communication unit (22) configured to transmit the driver state and the traveling position of the own vehicle (1c) and receive other driver states and traveling positions of the other vehicles (1d-1h); and
a driving state presentation unit (28, 29) configured to present the detected driver state and the traveling position of the own vehicle (1c) as well as the driver states and the traveling positions of the other vehicles (1d-1h);
wherein the driving state presentation unit (28, 29) comprises:
a presentation mode selecting unit (35) configured to select presentation modes of the driver states of the other vehicles (1d-1h) based on the driver state of the own vehicle (1c); and
a presentation information generating unit (36) configured to generate presentation information in response to the selected presentation modes based on the driver state and the traveling position of the own vehicle (1c) and the driver states and the traveling positions of the other vehicles (1d-1h); and
wherein contents and a method of presenting the driver states of the other vehicles vary depending on the driver states of the own vehicle and of the other vehicles.

2. The driving state sharing device (20) according to claim 1, wherein the driver state detector (21) comprises at least one of a driving skill determining unit (34) configured to determine a driving skill of the driver and a cognitive and judgement ability determining unit (33) configured to a determine a cognitive and judgement ability of the driver.

3. The driving state sharing device (20) according to claim 1 or 2, wherein the presentation information generating unit (36) generates presentation information in response to the selected presentation modes also based on a distance between the traveling position of the own vehicle (1c) and the traveling positions of the other vehicles (1d-1h).

4. The driving state sharing device (20) according to any one of claims 1 to 3, further comprising:
a database configured to store the driver state of the own vehicle (1c) and the driver states of the other vehicles (1d-1h); and
a driver state transition calculating unit (25) configured to calculate transitions in the driver states of the own vehicle (1c) and the other vehicles (1d-1h) based on the information stored in the database (23), wherein
the presentation information generating unit (36) generates the presentation information also based on the transitions in the driver states of the own vehicle (1c) and the other vehicles (1d-1h).

5. The driving state sharing device (20) according to any one of claims 1 to 4, wherein ID information corresponding to each vehicle (1c-1h) is given to the detected driver state and the traveling position of the vehicle (1c-1h).

6. A driving state sharing system, comprising:
a plurality of driver state sharing devices (20) according to any one of claims 1 to 5; and a web server (51) configured to receive driver states and traveling positions of various vehicles (1c-1h) from the communication units (22) and transmit to the vehicles (1c-1h) the driver states and the traveling positions of the vehicles (1c-1h) traveling therearound.

## Patentansprüche

1. Eine Vorrichtung zum Teilen eines Fahrzustands (20), die Fahrzustände eines eigenen Fahrzeugs (1c) und anderer Fahrzeuge (1d-1h) teilt, umfassend:
einen Fahrerzustandsdetektor (21), der so konfiguriert ist, dass er einen Fahrerzustand des eigenen Fahrzeugs (1c) detektiert;
einen Fahrpositionsdetektor (47), der so konfiguriert ist, dass er eine Fahrposition des eigenen Fahrzeugs (1c) detektiert;
eine Kommunikationseinheit (22), die so konfiguriert ist, dass sie den Fahrerzustand und die Fahrposition des eigenen Fahrzeugs (1c) überträgt und andere Fahrerzustände und
Fahrpositionen der anderen Fahrzeuge (1d-1h) empfängt; und
eine Fahrzustandspräsentationseinheit (28, 29), die so konfiguriert ist, dass sie den detektierten Fahrerzustand und die Fahrposition des eigenen Fahrzeugs (1c) sowie die Fahrerzustände und die Fahrpositionen der anderen Fahrzeuge (1d-1h) präsentiert;
wobei die Fahrzustandspräsentationseinheit (28, 29) umfasst:
eine Präsentationsmodusauswahleinheit (35), die konfiguriert ist, um Präsentationsmodi der Fahrerzustände der anderen Fahrzeuge (1d-1h) basierend auf dem Fahrerzustand des eigenen Fahrzeugs (1c) auszuwählen; und
eine Präsentationsinformationserzeugungseinheit (36), die so konfiguriert ist, dass sie Präsentationsinformation in Reaktion auf die ausgewählten Präsentationsmodi auf Basis des Fahrerzustands und der Fahrposition des eigenen Fahrzeugs (1c) und der Fahrerzustände und der Fahrpositionen der anderen Fahrzeuge (1d-1h) erzeugt; und
wobei die Inhalte und ein Verfahren zur Präsentation der Fahrerzustände der anderen Fahrzeuge in Abhängigkeit von den Fahrerzuständen des eigenen Fahrzeugs und der anderen Fahrzeuge variieren.

2. Die Vorrichtung zum Teilen eines Fahrzustands (20) nach Anspruch 1, wobei der Fahrerzustandsdetektor (21) mindestens eine Einheit aus einer Fahrfähigkeitsbestimmungseinheit (34), die so konfiguriert ist, dass sie eine Fahrfähigkeit des Fahrers bestimmt, und eine Einheit (33) zur Bestimmung der kognitiven und Urteilsfähigkeit, die so konfiguriert ist, dass sie eine kognitive und Urteilsfähigkeit des Fahrers bestimmt, umfasst.

3. Die Vorrichtung zum Teilen eines Fahrzustands (20) nach Anspruch 1 oder 2, wobei die Präsentationsinformationserzeugungseinheit (36) Präsentationsinformation in Reaktion auf die ausgewählten Präsentationsmodi auch auf der Grundlage eines Abstands zwischen der Fahrposition des eigenen Fahrzeugs (1c) und den Fahrpositionen der anderen Fahrzeuge (1d-1h) erzeugt.

4. Die Vorrichtung zum Teilen eines Fahrzustands (20) nach irgendeinem der Ansprüche 1 bis 3, ferner umfassend:
eine Datenbank, die so konfiguriert ist, dass sie den Fahrerzustand des eigenen Fahrzeugs (1c) und die Fahrerzustände der anderen Fahrzeuge (1d-1h) speichert; und
eine Fahrerzustandsübergangsberechnungseinheit (25), die so konfiguriert ist, dass sie Übergänge in den Fahrerzuständen des eigenen Fahrzeugs (1c) und der anderen Fahrzeuge (1d-1h) auf Basis der in der Datenbank (23) gespeicherten Information berechnet, wobei
die Präsentationsinformationserzeugungseinheit (36) die Präsentationsinformation auch auf Basis der Übergänge in den Fahrerzuständen des eigenen Fahrzeugs (1c) und der anderen Fahrzeuge (1d-1h) erzeugt.

5. Die Vorrichtung zum Teilen eines Fahrzustands (20) nach irgendeinem der Ansprüche 1 bis 4, wobei an den detektierten Fahrerzustand und der Fahrposition des Fahrzeugs (1c-1h) eine jedem Fahrzeug (1c-1h) entsprechende ID-Information vergeben ist.

6. System zum Teilen eines Fahrzustands, umfassend:
eine Vielzahl von Vorrichtungen (20) zum Teilen des Fahrerzustände nach irgendeinem der Ansprüche 1 bis 5; und
einen Webserver (51), der so konfiguriert ist, dass er Fahrerzustände und Fahrpositionen verschiedener Fahrzeuge (1c-1h) von den Kommunikationseinheiten (22) empfängt und an die Fahrzeuge (1c-1h) die Fahrerzustände und die Fahrpositionen der um sie herumfahrenden Fahrzeuge (1c-1h) überträgt.

## Revendications

1. Dispositif de partage d'état de marche (20) qui partage les états de marche de son propre véhicule (1c) et d'autres véhicules (1d à 1h), comprenant :
un détecteur d'état du conducteur (21) configuré pour détecter un état du conducteur de son propre véhicule (1c),
un détecteur de position de déplacement (47) configuré pour détecter une position de déplacement de son véhicule personnel (1c),
une unité de communication (22) configurée pour transmettre l'état du conducteur et la position de déplacement de son propre véhicule (1c) et recevoir d'autres états de conducteurs et positions de déplacement des autres véhicules (1d à 1h), et
une unité de présentation d'état de marche (28, 29) configurée pour présenter l'état du conducteur et la position de déplacement détectés de son propre véhicule (1c) tout comme les états des conducteurs et les positions de déplacement des autres véhicules (1d à 1h),
dans lequel l'unité de présentation d'état de marche (28, 29) comprend :
une unité de sélection de mode de présentation (35) configurée pour sélectionner des modes de présentation des états des conducteurs des autres véhicules (1d à 1h) sur la base de l'état du conducteur de son propre véhicule (1c), et
une unité de génération d'informations de présentation (36) configurée pour générer des informations de présentation en réponse aux modes sélectionnés de présentation sur la base de l'état du conducteur et de la position de déplacement de son propre véhicule (1c) ainsi que des états des conducteurs et des positions de déplacement des autres véhicules (1d à 1h), et
dans lequel le contenu et le procédé de présentation des états des conducteurs des autres véhicules varient en fonction des états des conducteurs du véhicule propre et des autres véhicules.

2. Dispositif de partage d'état de marche (20) selon la revendication 1, dans lequel le détecteur d'état du conducteur (21) comprend au moins l'une d'une unité de détermination et connaissance de conduite (34) configurée pour déterminer la connaissance de conduite du conducteur et d'une unité de détermination de capacité cognitive et de jugement (33) configurée pour déterminer la capacité cognitive et de jugement du conducteur.

3. Dispositif de partage d'état de marche (20) selon la revendication 1 ou la revendication 2, dans lequel l'unité de génération d'informations de présentation (36) génère des informations de présentation en réponse aux modes sélectionnés de présentation sur la base de la distance entre la position de marche du véhicule propre (1c) et les positions de déplacement des autres véhicules (1d à 1h).

4. Dispositif de partage d'état de marche (20) selon l'une quelconque des revendications 1 à 3, comprenant en outre :
une base de données configurée pour stocker l'état du conducteur du véhicule propre (1c) et l'état des conducteurs des autres véhicules (1d à 1h), et
une unité de calcul de transition d'état de conducteurs (25) configurée pour calculer des transitions dans les états des conducteurs du véhicule propre (1c) et des autres véhicules (1d à 1h) sur la base des informations stockées dans la base de données (23), où
l'unité de génération d'informations de présentation (36) génère également les informations de présentation sur la base des transitions des états des conducteurs du véhicule propre (1c) et des autres véhicules (1d à 1h).

5. Dispositif de partage d'état de marche (20) selon l'une quelconque des revendications 1 à 4, dans lequel des informations d'identification correspondant à chaque véhicule (1c à 1h) sont données à l'état du conducteur et la position de déplacement détectés du véhicule (1c à 1h).

6. Système de partage d'état de marche comprenant :
une pluralité de dispositifs de partage d'état de conducteur (20) conformes à l'une quelconque des revendications 1 à 5, et
un serveur Web (51) configuré pour recevoir des états des conducteurs et des positions de déplacement de divers véhicules (1c à 1h) en provenance des unités de communication (22) et pour transmettre aux véhicules (1c à 1h) les états des conducteurs et les positions de déplacement des véhicules (1c à 1h) se déplaçant à sa périphérie.
